(19) Europäisches Patentamt
European Patent Office
Office européen des brevets

(11) EP 1 603 964 B1

(12) EUROPÄISCHE PATENTSCHRIFT

(45) Veröffentlichungstag und Bekanntmachung des Hinweises auf die Patenterteilung:
**05.10.2011 Patentblatt 2011/40**

(51) Int Cl.:
*C08G 63/85* (2006.01)    *C08G 63/88* (2006.01)
*C08G 18/42* (2006.01)

(21) Anmeldenummer: **04713883.9**

(22) Anmeldetag: **24.02.2004**

(86) Internationale Anmeldenummer:
**PCT/EP2004/001801**

(87) Internationale Veröffentlichungsnummer:
**WO 2004/081081 (23.09.2004 Gazette 2004/39)**

(54) **VERFAHREN ZUR HERSTELLUNG VON POLYESTEROLEN VERMINDERTER REAKTIVITÄT**

METHOD FOR PRODUCING POLYESTEROLS HAVING A REDUCED REACTIVITY

PROCEDE DE PRODUCTION DE POLYESTEROLS A REACTIVITE REDUITE

(84) Benannte Vertragsstaaten:
**AT BE BG CH CY CZ DE DK EE ES FI FR GB GR HU IE IT LI LU MC NL PT RO SE SI SK TR**

(30) Priorität: **12.03.2003 DE 10311121**

(43) Veröffentlichungstag der Anmeldung:
**14.12.2005 Patentblatt 2005/50**

(73) Patentinhaber: **BASF SE**
**67056 Ludwigshafen (DE)**

(72) Erfinder:
• **KREITSCHMANN, Mirko**
**52064 Aachen (DE)**
• **ROTERMUND, Udo**
**01990 Ortrand (DE)**
• **FRITSCH, Peter**
**01983 Grossraeschen (DE)**

(56) Entgegenhaltungen:
GB-A- 1 282 422    US-A- 3 157 618
US-A- 3 716 523    US-A- 3 794 592
US-A- 5 166 310

• DATABASE WPI Section Ch, Week 198831 Derwent Publications Ltd., London, GB; Class A25, AN 1988-217566 XP002284679 & JP 63 154718 A (HUMAN IND CORP) 28. Juni 1988 (1988-06-28)

EP 1 603 964 B1

**Beschreibung**

Die Erfindung betrifft ein Verfahren zur Herstellung von Polyesterolen durch katalytische Polykondensation von Dicarbonsäuren/Dicarbonsäurederivaten und H-funktionellen Substanzen unter Verwendung von Zinnkatalysatoren mit einer niedrigen Reaktivität gegenüber Isocyanaten.

Die Herstellung von Polyesterolen und der Einsatz derartiger Produkte in der Polyurethanchemie sind seit langem bekannt und vielfach beschrieben. Zumeist werden diese Produkte durch Veresterung von Dicarbonsäuren und mehrfunktionellen Alkoholen hergestellt. Eine zusammenfassende Übersicht über die Herstellung von Polyesterolen und deren Verarbeitung zu Polyurethanen (im Folgenden auch PUR genannt), insbesondere PUR-Schaumstoffen, wird beispielsweise im Kunststoff-Handbuch, Band VII, "Polyurethane", 1. Auflage 1966, herausgegeben von Dr. R. Vieweg und Dr. A. Höchtlen, und 2. Auflage, 1983, sowie 3. Auflage, 1993, herausgegeben von Dr. G. Oertel, (Carl Hanser Verlag, München) gegeben.

Die übliche Umsetzung von aromatischen und/oder aliphatischen Dicarbonsäuren, wie Adipinsäure oder Phthalsäure, mit zwei- und/oder dreifunktionellen Alkoholen, wie Ethylenglykol und ihre höheren Homologen, Diethylenglykol, Propylenglykol und ihre höheren Homologen, Dipropylenglykol, Butandiol, Neopentyglykol, Hexandiol, Trimethylolpropan oder Glyzerin, gegebenenfalls im Beisein von Metallkatalysatoren, führt zu Polyesterpolyolen mit breitem Molekulargewichts- und Anwendungsbereich.

Hydroxylverbindungen, wie Polyesterole, reagieren mit Isocyanaten unter Bildung von PUR. In einem günstigen Zeitraum soll die Polymerbildung und Herstellung von Produkten mit optimalen und vor allem konstanten Eigenschaften ablaufen. In vielen Anwendungen ist für die Ausbildung ganz bestimmter Produkteigenschaften oder einen reproduzierbaren Verarbeitungsprozess eine definierte Reaktionsgeschwindigkeit zwischen Polyesterolen und Isocyanaten erforderlich. So kann eine zu hohe Reaktionsgeschwindigkeit zu einem schnellen Anstieg der Viskosität führen (eventuell zu einem Festwerden des Produktes), was Schwierigkeiten bei der Verarbeitung hervorrufen kann (Schaumkollaps im Weichschaumbereich, Festwerden von Produkt bei TPU-Produktion, Gießzeit bei Gießelastomeren). Erschwerend für den Verarbeiter ist, dass die Reaktivität der Polyesterole in Abhängigkeit vom Herstellungsprozess schwanken kann und somit der Verarbeitungsprozess in Abhängigkeit von der Reaktivität häufig modifiziert werden muss. Hierbei ist für den Verarbeiter eine zu hohe Reaktiviät schwerer zu regulieren als eine zu geringe Reaktivität. Bei einer zu geringen Reaktivität kann der Prozess durch Zugabe bekannter PUR-Katalysatoren einfach eingestellt werden.

Es ist weiterhin bekannt, dass die zur Beschleunigung des Veresterungsprozesses eingesetzten Katalysatoren die PUR-Reaktion beeinflussen können. Für bestimmte PUR-Anwendungen ist es deshalb erforderlich, eine niedrige Katalysatormenge zu wählen, was allerdings zu langen Chargenlaufzeiten führt, oder die Reaktionsgeschwindigkeit durch Additive zu modifizieren. Zur Einstellung der Reaktionsgeschwindigkeit zwischen H-aktiven Verbindungen und Isocyanaten können gemäß dem Stand der Technik Inhibitoren eingesetzt werden. Solche Inhibitoren werden beispielsweise in dem oben zitierten Kunststoff-Handbuch beschrieben, wie Salzsäure, Benzoylchlorid und p-Toluolsulfonsäure. P-haltige Verbindungen, wie sie in dem Artikel von B. Fortunato, A. Munari, P. Manaresi und P.Monari in Polymer Vol. 35, Issue 18, S. 4006, beschrieben werden, können den Veresterungskatalysator komplexieren und somit auch die nachfolgende PUR-Reaktion verlangsamen. Die meist sauren Verbindungen können jedoch zu einer unerwünschten Verschlechterung der Hydrolysebeständigkeit des Produktes führen. In DE-A-2451727, DD 148882 und DD 148460 werden deshalb Aldehyde, Ketone bzw. β-Diketone zur Verminderung der Reaktivität eingesetzt. Zusätze solcher Art weisen jedoch häufig eine gewisse Flüchtigkeit auf und können somit zu dem bekannten Fogging-Phänomen beitragen. Generell können niedermolekulare Substanzen auch an die Oberfläche migrieren und dort zu einer Verschlechterung der Oberflächeneigenschaften des PUR beitragen.

Eine weitere Möglichkeit, die Reaktivität von Polyesterolen zu verringern, ist es, die eingesetzten Veresterungskatalysatoren durch Hydrolyse zu deaktivieren. So beschreibt DD 126276 ein Verfahren zur Reaktivitätseinstellung durch Zugabe von 0,001 bis 1,5 Masse-% Wasser. Nachteil dieses Verfahrens ist, dass für manche Anwendungen eine Entfernung des Wassers erforderlich ist (Verhinderung der Schaumreaktion). Erhöhte Wassergehalte führen außerdem bei der Lagerung des Polyesterols zu einer Beschleunigung der Hydrolyse und somit einer verringerten Lagerstabilität.

Der Erfindung lag deshalb die Aufgabe zugrunde, ein einfaches und ökonomisches Verfahren zur Verfügung zu stellen, das es erlaubt, Polyesterole mit einer niedrigen Reaktivität gegenüber Isocyanaten herzustellen. Bei der Herstellung sollten niedrige Chargenlaufzeiten erreicht werden. Nachteile, die durch den Zusatz von Additiven zustande kommen, wie Verringerung der Lagerstabilität, Verringerung der Hydrolysebeständigkeit, Migrationseffekte und störende Farbeffekte, sollten nicht auftreten.

Diese Aufgabe wurde überraschenderweise dadurch gelöst, dass die durch katalytische Polykondensation von Dicarbonsäuren/Dicarbonsäurederivate und H-funktionellen Substanzen unter Verwendung von Zinnkatalysatoren hergestellten Polyesterole nach Beendigung der Veresterungsreaktion in Kontakt mit Sauerstoff gebracht werden.

Gegenstand der Erfindung ist demzufolge ein Verfahren zur Herstellung von Polyesterolen verminderter Reaktivität durch katalytische Polykondensation von Dicarbonsäuren/Dicarbonsäurederivaten und H-funktionellen Substanzen unter Verwendung von Zinnkatalysatoren, das dadurch gekennzeichnet ist, dass die Polyesterole nach Beendigung der Veresterungsreaktion in Kontakt mit Sauerstoff gebracht werden.

Gegenstände der Erfindung sind weiterhin die nach diesem Verfahren erhaltenen Polyesterole selbst sowie deren Einsatz zur Herstellung von PUR.

Es war überraschend und in keiner Weise vorhersehbar, dass die Reaktivität des Polyesterols gegenüber Isocyanaten durch das Inkontaktbringen mit Sauerstoff, insbesondere Luftsauerstoff, ohne vorherige Hydrolyse des metallorganischen Katalysators, verringert werden kann.

Vielmehr wäre zu erwarten gewesen, dass eine Verringerung der Reaktivität des Polyesters nur durch Hydrolyse des homogen gelösten Katalysator zu erzielen sei.

Durch das Inkontaktbringen des Reaktionsgemisches mit Sauerstoff und die damit einhergehende Verringerung der Reaktivität des Polyesterols gegenüber Isocyanaten wurde die Möglichkeit geschaffen, im Herstellungsprozess der Polyesterole mit hohen Katalysatorgehalten zu arbeiten und dadurch kürzere Chargenlaufzeiten zu erhalten. Gleichzeitig weisen die fertigen Polyesterole niedrige Metallgehalte auf, was im Einsatz in der PUR-Herstellung bei vielen Anwendungsgebieten erwünscht ist. So stehen einige Zinnverbindungen in Verdach, gesundheitsschädlich zu wirken.

Die nach dem erfindungsgemäßen Verfahren hergestellten Polyesterole weisen eine niedrige Reaktivität gegenüber Isocyanaten, jedoch nicht die genannten Nachteile, wie Verringerung der Lagerstabilität, Verringerung der Hydrolysebeständigkeit, Migrationseffekte und störende Farbeffekte, auf. Durch die Absenkung der Reaktivität des Polyesterols wird dem Verarbeiter das Einstellen der optimalen Prozessparameter erleichtert. Es wird eine verbesserte und konstante Produktqualität bei der Verarbeitung erzielt.

Die erfindungsgemäße Herstellung der Polyesterole erfolgt durch katalytische Polykondensation von Dicarbonsäuren/Dicarbonsäurederivaten und H-funktionellen Substanzen, vorzugsweise bei Temperaturen von 150 bis 280°C, insbesondere von 200 bis 250°C, bei Einsatz von Sn-Katalysatoren unter Normaldruck bzw. Vakuum. Erforderlichenfalls kann durch Einleitung von Treibgasen, wie Stickstoff, die Abtrennung des Reaktionswassers vorgenommen werden.

Als Einsatzstoffe für das erfindungsgemäße Verfahren dienen aromatische und/oder aliphatische Dicarbonsäuren bzw. Dicarbonsäurederivate, wie beispielsweise Dicarbonsäureanhydride, und vorzugsweise di-, tri- und/oder höherfunktionelle Alkohole.

Als aliphatische und/oder aromatische Dicarbonsäuren werden beispielsweise Adipinsäure, Phthalsäure, Isophthalsäure und Terephthalsäure, letztere zumeist in Form ihrer Anhydride, daneben auch Oxalsäure, Bernsteinsäure, Glutarsäure, Azelainsäure und/oder Sebacinsäure und andere eingesetzt. Vorzugsweise verwendet werden Adipinsäure, Isophthalsäure, Phthal- und Terephthalsäure als reine Säuren und/oder als Anhydride und/oder Derivate dieser Säuren. Die Verbindungen können einzeln, als beliebige Gemische untereinander oder im Gemisch mit weiteren aromatischen und/oder aliphatischen Säuren zum Einsatz kommen.

Die H-funktionellen Substanzen werden, bezogen auf die verwendeten Dicarbonsäuren/Dicarbonsäurederivate, vorzugsweise in einem molaren Überschuss von 1,01 : 1 bis zu 5 : 1, vorzugsweise 1,03 : 1 bis 2 : 1, eingesetzt, um Polyesterole mit endständigen Hydroxylgruppen zu erhalten.

Als H-funktionelle Substanzen werden vor allem aliphatische Alkohole, wie Ethylen-, Propylenglykole bzw. höherkettige Glykole, Diglykole und/oder Polyole, insbesondere Polyetherpolyole, Polyesterpolyole bzw. Polyetheresterpolyole, eingesetzt. Diese können einzeln oder als beliebige Gemische mehrerer Alkohole untereinander oder auch mit tri- und/oder höherfunktionellen Alkoholen und/oder Polyolen, wie z. B. Trimethylolpropan bzw. Glyzerin, verwendet werden.

Als H-funktionelle Substanzen können auch Amine, wie beispielsweise Alkyl-oder Arylamine, oder auch aliphatische und/oder aromatische Verbindungen, die mehrere Aminogruppen enthalten, wie beispielsweise Ethylendiamin, Diethylentriamin, Triethylentetramin und Tetraethylenpentamin, eingesetzt werden.

Besonders bevorzugt werden Glykole, Glyzerin, Trimethylolpropan und/oder Pentaerythrit.

Die Reaktion wird unter Zusatz von für die Veresterung üblichen Zinnkatalysatoren beschleunigt. Dabei werden erfindungsgemäß bevorzugt Sn(II)-Verbindungen, wie beispielsweise Zinn(II)-2-ethylhexanoat, $SnCl_2$ und SnO, aber auch Sn(IV)-Verbindungen, wie beispielsweise Dibutylzinndilaurat (DBTL), eingesetzt.

Als besonders vorteilhaft erweist sich das erfindungsgemäße Verfahren bei Verwendung von Zinn(II)-Katalysatoren, in einer besonder bervorzugten Variante des Verfahrens werden Zinn(II)-2-ethylhexanoat oder Zinn(II)chlorid eingesetzt.

Die Menge der zugesetzten Zinnkatalysatoren beträgt nach dem Stand der Technik üblicherweise 0,01 bis 1000 ppm, insbesondere 0,1 bis 50 ppm, jeweils bezogen auf das fertige Polyesterol. Nach dem erfindungsgemäßen Verfahren kann die Reaktivität von katalysierten Polyesterolen verringert werden, was zu einer verbesserten Verarbeitbarkeit in bestimmten PUR-Herstellungsverfahren führt. Nach dem erfindungsgemäßen Verfahren ist es deshalb möglich, höhere Katalysatorkonzentrationen einzusetzen, was die Reaktion beschleunigt und die Reaktionszyklen verkürzt. Vorteilhafterweise werden erfindungsgemäß bis zu 1000 ppm, besonders bevorzugt 1 bis 1000 ppm Katalysator verwendet.

Die Reaktivität der Polyesterole gegenüber Isocyanaten wird erfindungsgemäß dadurch verringert, dass die Polyesterole nach Beendigung der Veresterungsreaktion in Kontakt mit Sauerstoff gebracht werden.

Dabei kann der Sauerstoff als reiner Sauerstoff oder im Gemisch mit anderen Gasen, wie Stickstoff oder anderen Inertgasen, wie Helium, Neon oder Argon, eingesetzt werden.

Vorzugsweise wird Sauerstoff der Luft verwendet. Der Luftkontakt kann beispielsweise durch Einleiten von trockener Pressluft, Einleiten eines Magerluftgemisches oder durch Lagern des Polyesterolgemisches an der Luft gewährleistet werden. Der Sauerstoff wird dann über die Grenzfläche Polyesterol/Luft absorbiert. Unter Magerluft werden Inertgas-Luft-Gemische mit einem Sauerstoffgehalt verstanden, der geringer ist als der von Luft. Vorzugsweise ist der Gehalt an Sauerstoff kleiner 12 Vol.%. Das Inertgas ist zumeist Stickstoff.

Vorteilhafterweise erfolgt das Inkontaktbringen des Polyesterols mit Sauerstoff bzw. dessen Gemischen oder der Luft

- in dem Polyesterreaktor während der Umsetzungsreaktion, vorzugsweise nach Beendigung der Vakuumphase (Variante 1), und/oder
- in dem Lagertank des fertigen Polyesterols beim Hersteller oder beim Kunden (Variante 2) und/oder
- in den Tankfahrzeugen, die zum Transport der Polyesterole eingesetzt werden, insbesondere durch Ausdrücken der Tankfahrzeuge mit trockener Pressluft (Variante 3).

Variante 1 hat den Vorteil, dass vorhandene Einrichtungen eines Polyesterreaktors zum Einleiten von Gasen, die in der Regel vorhanden sind, genutzt werden können. Die Zufuhr von Sauerstoff kann alternativ besonders einfach durch das Brechen des Vakuums mit Luftsauerstoff erfolgen.

Variante 2 hat den Vorteil, dass die Absorption von Luft an der Grenzfläche Polyol/Luft im Lagertank erfolgen kann. Es sind keine zusätzlichen Vorrichtungen zur Einleitung von Gasen erforderlich. Auf eine aufwändige Inertisierung der Tanks kann verzichtet werden. Durch eine Durchmischung des Tankinhaltes, z. B. durch Rühren oder Umwälzen, kann die Absorption von Luft erhöht werden und somit das Absenken der Reaktivität reguliert werden.

Variante 3 hat den Vorteil, dass man zum Einleiten von Sauerstoff die zum Ausdrücken des Tankfahrzeuges erforderlichen Installationen nutzen kann.

In Abhängigkeit von der Wertigkeit des eingesetzten Zinnkatalysators sowie von der Konzentration und Menge des mit dem Polyol in Kontakt gebrachten Luftsauerstoffes oder Luftgemisches, kann die Reaktivität des Polyesterols in unterschiedlichem Maße reduziert werden. Der genaue Grad der Absenkung wird in der Praxis von Lagertemperatur, der Expositionsdauer des Polyesterols an Luft, sowie dem Durchmischungsgrad des Tank- oder Reaktorinhaltes abhängen und muss in Abhängigkeit von der in der Praxis vorherrschenden Bedingungen individuell eingestellt werden.

Als besonders vorteilhaft erweist sich das erfindungsgemäße Verfahren, wenn das Inkontaktbringen des Polyesterols mit Luft durch deren Einleiten in Form von getrockneter Pressluft oder Magerluft (Variante A) und/oder durch Absorption von Sauerstoff durch Lagerung des Polyesterols unter atmosphärischen Bedingungen (Variante B) erfolgt.

In einer bevorzugten Ausführungsform der Variante A wird der Sauerstoff in Form von Pressluft, Magerluft oder eines Gemisches von Sauerstoff und eines Inertgases eingeleitet. Die Dauer der Einleitung beträgt 1 bis 1500 Minuten, vorteilhafterweise 5 bis 500 Minuten und besonders bevorzugt 15 bis 350 Minuten. Nach Beendigung des Inkontaktbringens mit Sauerstoff sollte eine Zeitspanne von mindesten 1 Minute, vorteilhafterweise von mindestens 15 Minuten und besonders bevorzugt von mindestens 60 Minuten, zwischen dem Ende der Einleitung und der weiteren Verarbeitung zum PUR liegen.

In einer bevorzugten Ausführung der Variante B erfolgt die Lagerung des Polyesterols an der Luft mindestens 5 Minuten, vorteilhafterweise mindestens 15 Minuten und besonders bevorzugt mindestens 60 Minuten. Wird das Polyesterol erfindungsgemäß nach Variante B gehandhabt, kann die Weiterverarbeitung zum Polyurethan unmittelbar erfolgten.

Die erfindungsgemäß hergestellten Polyesterole können nach dem Inkontaktbringen mit Sauerstoff im flüssigen Zustand bei mindestens 40°C, vorzugsweise von 50 bis 95°C, gelagert werden.

Klassischerweise erfolgt die weitere Lagerung unter Vakuum oder unter $N_2$. Sie kann auch unter Sauerstoff (gemischen) oder Luft erfolgen. Es empfiehlt sich jedoch vor dem Verarbeitungsschritt des Polyesterols zum Polyurethan, das Polyesterol zu entgasen, da dem Sauerstoff eine schädigende Wirkung bei der Verarbeitung zum Polyurethan bei höheren Temperaturen zugeschrieben wird.

Die erfindungsgemäß hergestellten Polyesterole können außerdem bei Bedarf einer üblichen Nachbehandlung unterzogen werden.

Die erfindungsgemäßen Polyesterole sind dadurch gekennzeichnet, dass diese gegenüber Isocyanaten eine niedrigere Reaktivität aufweisen als vergleichsweise katalysierte Polyesterole, die nicht der erfindungsgemäßen Behandlung unterzogen wurden.

Die erfindungsgemäßen Polyesterole sind weiterhin dadurch gekennzeichnet, dass nach der erfindungsgemäßen Behandlung des Polyesterols mit Sauerstoff/Luft der mit Polarographie nachweisbare Zinngehalt des Polyesterols kleiner ist als der Zinngehalt, der mit ICP-AAS (inductively coupled plasma atomic absorption spectroscopy) oder RFA (Röntgen-Fluoreszenz-Analyse) nachweisbar ist.

Sn(II)-Verbindungen, wie SnCl$_2$ oder Sn(II)octoat, sowie Sn(IV)-Verbindungen, wie DBTL, können durch starke Säuren in eine ionische Form überführt werden und mittels der Methode der Polarographie quantitativ und qualitativ nachgewiesen werden. Nach der erfindungsgemäßen Behandlung der zinnkatalysierten Polyesterole erfolgt wahrscheinlich eine Oxidation des Katalysators von Sn(II)- zu Sn(IV)-Spezies und bei nachfolgender Reaktion mit Wasserspuren (Hydrolyse) werden Aggregate gebildet, die Vorläufer von SnO$_2$ darstellen. Sn(IV)-Verbindungen können unter den erfindungsgemäß beschriebenen Bedingungen ebenfalls aggregieren. Diese Aggregate können mit starken Säuren nicht mehr in eine ionische Form überführt und nicht mehr mittels der Polarographie detektiert werden. Der Gesamtzinngehalt, der mit den Methoden der ICP-AAS oder RFA bestimmt wird, bleibt jedoch vor und nach der Lufteinleitung annähernd gleich, da diese Methoden nicht auf den Oxidationszustand des Zinns, sondern nur auf die Gesamtmenge Zinn sensitiv ist. Erfindungsgemäß liegt deshalb der mittels Polarographie nachgewiesene Zinngehalt unter dem mit ICP-AAS bzw. RFA ermittelten Zinngehalt.

Sn(IV)-Katalysatoren, wie Dibutylzinndilaurat oder Dibutylzinnoxid, verlieren nach erfindungsgemäß erfolgtem Inkontaktbringen mit Sauerstoff/Luft ihre polarographische Aktivität wesentlich langsamer als Sn(II)-Katalysatoren. Dialkylzinnverbindungen können im Wesentlichen nur zu polymeren Ketten aggregieren und nicht zu dreidimensionalen Objekten. Deshalb liegt zwischen den mit Polarographie und den mit ICP-AAS, AES (atomic emission spectroscopy) oder RFA nachgewiesenen Zinngehalten ein geringerer Unterschied vor. Solche Katalysatoren eignen sich deshalb nicht so gut zur Herstellung von Polyesterolen, die eine geringe Reaktivität gegenüber Isocyanaten aufweisen sollen.

Die bei der Polarographie verwendete Grundlösung sowie Geräteeinstellung wird nachstehend beschrieben:

Polarographische Bestimmung von Zinnkatalysatoren

Geräte:

- VA-Processor 746 mit VA-Stand 694, Fa. Metrohm
- Elektrode: MME als Quecksilbertropfelektrode (MDE)
- Bezugselektrode: Ag/AgCl
- Elektrolytschlüssel: LiCl gesättigt in Ethanol,

Grundlösung:

Bestimmung des Zinngehaltes von Zinn(II)-katalysierten Polyesterolen

- 0,2 mol Methansulfonsäure in einem Toluol/Methanol-Gemisch (1:1 Vol.-%/Vol.-%),
- Standardlösung des reinen Zinn(II)-Katalysators, z.B. Zinn(II)-2-Ethylhexanoat, in Ethanol, Konzentration soll etwa dem Zehnfachen des zu erwartenden Gehaltes der Probe entsprechen.

Bestimmung des Zinngehaltes von Zinn(IV)-katalysierten Polyesterolen

- 0,2 mol Methansulfonsäure in einem Gemisch aus Dimethylformamid (DMF)/Wasser (90:10 Vol.-%/Vol.-%),
- Standardlösung des reinen Zinn(IV)-Katalysator, z.B. Dibutylzinndilaurat, in DMF/Wasser (9:1), Konzentration soll etwa dem Zehnfachen des zu erwartenden Gehaltes der Probe entsprechen.

Messbedingungen:

Differential-Puls-Polarographie (DP-Polarographie), entsprechend Grundeinstellungen am VA 746 für die DP-Methode

Durchführung:

Im Polarographiegefäß werden 10 ml der Grundlösung vorgelegt. In einem 25 ml-Maßkolben werden 2,5 g Polyesterolprobe auf 1 mg genau eingewogen und in einem 1:1 (Vol.-%/Vol.-%)-Gemisch von Toluol und Methanol gelöst und bis zur Marke aufgefüllt.

10 ml dieser Lösung werden in das Polarographiegefäß zu der Grundlösung hinzu pipettiert. Nach dem Entlüften mit Stickstoff (5 min) wird das Polarogramm im Bereich von -100 bis -800 mV aufgenommen. Der Peak zwischen -300 und -600 mV, der der Zinnverbindung entspricht, wird unter Standardbedingungen ausgewertet. Nun werden 0,1 ml der Standardlösung von Zinnoctoat der Messlösung zugegeben und erneut polarographiert. Eine zweite Aufstockung wird analog durchgeführt.

Nach den üblichen Verfahren, wie sie beispielsweise beschrieben sind in Günter Henze, Polarographie und Voltametrie - Grundlagen und analytische Praxis, Springer Verlag Berlin, 2001, wird die Probekonzentration aus den Stromstärken der Probemessung und der Standardadditionen berechnet.

Reaktivitätstest
Es wird die Reaktivitätszahl (RN - reactivity number), ermittelt aus der durchschnittlichen Steigung der Temperatur-Zeit-Kurve der Urethanreaktion bis 95°C in K/s, bestimmt.
Dafür wird eine Rezeptur eingesetzt, bestehend aus:

11222 / OH-Zahl g (0,1 mol) des zu testenden Polyesterols,
20 g (0,22 mol) Butandiol-1,4 und
80,1 g (0,32 mol) 4,4'-Diphenylmethandiisocyanat.

Die Bestimmung beruht auf der Umsetzung des Polyesterols in Gegenwart von Kettenverlängerer mit Diisocyanat gemäß vorstehender Rezeptur und Verfolgung der Reaktionstemperatur der Urethanbüdungsreaktion über die Zeit bis zum Erreichen einer Reaktionstemperatur von 95°C. Hierzu werden die auf 60°C temperierten Komponenten (A-Komponente: Polyesterol und 1,4-Butandiol, B-Komponente: Diphenylmethandüsocyanat) bei 60°C miteinander vermischt (Startpunkt der Reaktion) und die Zeit $\Delta t$ bis zu einem Erreichen von 95°C gemessen. RN ist wie folgt definiert:

$$RN = \Delta T/\Delta t = (368\ K - 333\ K)/(\Delta t) = 35\ K/\Delta t\ \ [K/s],$$

worin $\Delta t$ die Zeitdauer vom Startpunkt der Reaktion bis zum Erreichen von 95°C ist. Ein Polyesterol ist umso weniger reaktiv, je kleiner RN ist.
Die Erfindung wird in den nachfolgenden Ausführungsbeispielen näher erläutert, ohne damit eine Einschränküng vorzunehmen.

Beispiel 1

Ein Polyesterol aus 5731 kg Adipinsäure (ADS) und 3923 kg 1,4-Butandiol (B14) wurde in einem Veresterungsreaktor bei 240°C unter Abdestillation des entstehenden Kondensationswassers hergestellt. Bei einer Säurezahl (SZ) von etwa 5 mg KOH/g wurden 10 ppm Zinn(II)-2-ethylhexanoat zugegeben (entspricht 2,8 ppm Sn-Metall). Dieses Polyesterol wurde nach dem Erreichen einer SZ < 1 mg KOH/g unter Stickstoff in einen Lagertank gedrückt (OH-Zahl des Polyesterols: 46 mg KOH/g).
Eine Probe (ca. 5 kg in einem Weißblecheimer) dieser Polyesterolcharge wurde aus dem Lagertank entnommen und ca. 1 h später wurde die Reaktivität bestimmt. Die Reaktivitätszahl RN betrug 0,24 K/s. Der Zinngehalt wurde mittels Polarographie und ICP-AAS ermittelt. Bei der Polarographie betrug der Sn-Gehalt 2 ppm, mittels der ICP-AAS wurden 3 ppm bestimmt (theoretischer Wert 3 ppm).
Die Probenrestmenge wurde bei 95°C im Trockenschrank 3 Tage unter atmosphärischen Bedingungen gelagert. Danach wurde die Reaktivität erneut gemessen. Die Reaktivitätszahl verminderte sich auf 0,19 K/s. Der polarographiphe Zinngehalt betrug <1 ppm, der mit ICP-AAS gemessene Zinngehalt betrug weiterhin 3 ppm.
Am selben Tag wurde erneut eine Probe aus dem mit Stickstoff beschleierten Lagertank genommen. Die Reaktivitätszahl betrug weiterhin 0,24 K/s, der polarographische Zinngehalt 2 ppm, während der mit ICP-AAS ermittelte Zinngehalt 3 ppm entsprach. Aus dem Beispiel ist ersichtlich, dass die Lagerbedingungen einen signifikanten Einfluss auf die Polyesterol-Reaktivität ausüben. Unter Stickstoffbeschleierung verliert der Ester seine Grundreaktivität nicht oder kaum. Unter Lagerung an der Luft nahm die Reaktivitätszahl um 80% des ursprünglichen Wertes ab. Die Abnahme der Reaktivität korreliert mit einem abnehmenden Gehalt an polarographisch nachweisbaren Zinn. Der erfindungsgemäß behandelte Ester ist dadurch gekennzeichnet, dass der mittels ICP-AAS bestimmte Zinngehalt höher ist als der polarographisch nachweisbare Zinngehalt.

Beispiel 2 (Vergleichsbeispiel zu Beispiel 3)

Zu einem Polyesterol aus 59,36 kg ADS und 40,6 kg B14 wurden kurz vor Ende der Reaktion (SZ etwa 2 mg KOH/g) 75 ppm Zinn(II)-2-ethylhexanoat (entspricht 22 ppm Sn) hinzugegeben. Die Reaktivität der Probe wurde umgehend nach Beendigung der Reaktion bestimmt. In ca. 4 kg der Probe wurden in einem 5 l - Dreihalskolben mit Rührer und Gaseinleitungsrohr bei 95°C trockene Pressluft (50 l/h) eingeleitet und in Abständen von 24 h die Reaktivitätszahl bestimmt.

Tabelle:

| Esterol | Lagerart | Lagerdauer | RN | Sn (Polarographie) | Sn (AAS) |
|---------|----------|-----------|-----|--------------------|----------|
| VP9186 | Lufteinleitung | 0 h<br>24 h | 0,95 K/s<br>0,19 K/s | 20 ppm<br><1 ppm | 22,0 ppm<br>22,2 ppm |
| VP9186 | Lufteinleitung | 0 h<br>23 h | 0,90 K/s<br>0,17 K/s | 19 ppm<br><1 ppm | 22,3 ppm<br>22,5 ppm |

Aus diesen Versuchen ist ersichtlich, dass die Reaktivität des Polyesterols durch Inkontaktbringen mit Luft abnimmt. Die Esterole sind dadurch gekennzeichnet, dass der polarographisch nachweisbare Zinngehalt so hoch wie der mittels ICP-AAS ermittelte Zinngehalt ist.

Beispiel 3

Zu einem Polyesterol aus 59,36 kg ADS und 40,6 kg B14 wurden kurz vor Ende der Reaktion (SZ etwa 2 mg KOH/g) 75 ppm Zinn(II)-2-ethylhexanoat (entspricht ca. 22 ppm Sn) hinzugegeben. Die Reaktivität der Probe wurde umgehend nach Beendigung der Reaktion bestimmt. 4 kg der Probe wurden in einem Kolben unter Vakuum (10 mbar) bei 95°C gelagert. Die Reaktivität der Proben wurde in regelmäßigen Abständen bestimmt.
Tabelle:

| Ester | Lagerart | Lagerdauer | RN | Sn (Polarographie) | Sn (AAS) |
|-------|----------|-----------|-----|--------------------|----------|
| VP9186 | Vakuum | 2 h | 0,88 K/s | 19 ppm | 22,1 ppm |
|  |  | 20 h | 0,97 K/s | 20 ppm | 22,3 ppm |

Aus diesen Versuchen ist ersichtlich, dass sich die Reaktivität von erfindungsgemäß behandelten Polyesterolen im Vergleich zum Beispiel 3 nicht ändert. Der polarographisch ermittelte Zinngehalt entspricht dem Zinngehalt, der mittels ICP bestimmt wurde.

Beispiel 4

Zu einem Polyesterol aus 59,36 kg ADS und 40,6 kg B14 wurden vor Beginn der Vakuumphase 516 ppm Dibutylzinndilaurat (entspricht 100 ppm Sn) hinzugegeben. Die Reaktivität der Probe wurde umgehend nach Beendigung der Reaktion bestimmt. In ca. 4 kg der Probe wurde in einem 5 l - Dreihalskolben mit Rührer und Gaseinleitungsrohr bei 95°C getrocknete Pressluft eingeleitet (50 l/h). Weitere 4 kg der Probe wurden in einem Kolben unter Vakuum (10 mbar) bei 95°C bzw. im Trockenschrank bei 95°C gelagert. Die Reaktivität der Proben wurde in regelmäßigen Abständen bestimmt. Aus nachfolgender Tabelle ist ersichtlich, dass die Reaktivität der mit Lufteinleitung gelagerten Proben abnimmt, während die Reaktivität der unter Vakuum gelagerten Proben nahezu konstant bleibt.

Tabelle:

| Lagerung unter Lufteinleitung bei 95°C | | | |
|---------|--------|--------------------|----------------|
| Lagerzeit | RN | Sn (Polarographie) | Sn (ICP-AAS) |
| 0 h | 2,3 K/s | 33,2 ppm | 111 ppm |
| 24 h | 1,9 K/s | 32,5 ppm | 113 ppm |
| 48 h | 1,8 K/s | 33,4 ppm | 112 ppm |
| 116 h | 0,7 K/s | 12,2 ppm | 112 ppm |
| 140 h | 0,4 K/s | 5,2 ppm | 111 ppm |

(fortgesetzt)

| Lagerung unter Vakuum bei 95°C | | | |
|---|---|---|---|
| Lagerzeit | RN | Sn (Polarographie) | Sn (ICP-AAS) |
| 0 h | 2,3 K/s | 33,2 ppm | 111 ppm |
| 24 h | 2,1 K/s | 33,1ppm | 110 ppm |
| 48 h | 1,9 K/s | 31,0 ppm | 113 ppm |
| 116 h | 1,9 K/s | 32,8 ppm | 111 ppm |
| 140 h | 1,8 K/s | 27,0 ppm | 114 ppm |
| Lagerung in Trockenschrank bei 95°C | | | |
| Lagerzeit | RN | Sn (Polarographie) | Sn (ICP-AAS) |
| 0 h | 2,3 K/s | 33,2 ppm | 111 ppm |
| 24 h | 1,8K/s | 36,1 ppm | 110 ppm |
| 48 h | 1,6 K/s | 34,0 ppm | 112 ppm |
| 116 h | 1,5 K/s | 34,5 ppm | 110 ppm |
| 140 h | 1,4 K/s | 26,8 ppm | 111 ppm |

Das Beispiel zeigt, dass die Reaktivität von Sn(IV) katalysierten Polyolen durch Einleiten von Luft abnimmt. Mit der Abnahme der Reaktivität sinkt der polarographisch nachweisbare Zinngehalt.

Beispiel 5

Zu einem Polyesterol aus 59,36 kg ADS und 40,6 kg B14 wurden vor Beginn der Vakuumphase 454 ppm 2-Ethylzinnhexanoat hinzugegeben. Die Reaktivität der Probe wurde umgehend nach Beendigung der Reaktion bestimmt. In ca. 4 kg der Probe wurde in einem 5 l - Dreihalskolben mit Rührer und Gaseinleitungsrohr bei 95°C getrocknete Pressluft eingeleitet. Weitere 4 kg der Probe wurden in einem Kolben unter Vakuum (10 mbar) bei 95°C bzw. im Trokkenschrank bei 95°C gelagert. Die Reaktivität der Proben wurde in regelmäßigen Abständen bestimmt. Aus nachfolgender Tabelle ist ersichtlich, dass die Reaktivität der mit Lufteinleitung gelagerten Proben abnimmt, während die Reaktivität der unter Vakuum gelagerten Proben konstant bleibt.
Tabelle:

| Lagerung unter Lufteinleitung bei 95°C | | | |
|---|---|---|---|
| Lagerzeit | RN | Sn (Polarographie) | Sn (RFA) |
| 0 h | 1,2 K/s | 41 ppm | 133 ppm |
| 24 h | 0,3 K/s | 5 ppm | 132 ppm |
| 48 h | 0,3 K/s | <1 ppm | 119 ppm |
| 118 h | 0,3 K/s | <1 ppm | 132 ppm |
| Lagerung unter Vakuum bei 95°C | | | |
| Lagerzeit | RN | Sn (Polarographie) | Sn (RFA) |
| 0 h | 1,2 K/s | 41 ppm | 133 ppm |
| 24 h | 1,4 K/s | 45 ppm | 127 ppm |
| 48 h | 1,5 K/s | 45 ppm | 119 ppm |
| 118 h | 1,5 K/s | 50 ppm | 119 ppm |

(fortgesetzt)

| Lagerung in Trockenschrank bei 95°C | | | |
|---|---|---|---|
| Lagerzeit | RN | Sn (Polarographie) | Sn (RFA) |
| 0 h | 1,2 K/s | 41 ppm | 133 ppm |
| 24 h | 1,3 K/s | 43 ppm | 132 ppm |
| 48 h | 1,4 K/s | 43 ppm | 117 ppm |
| 118 h | 0,5 K/s | 34 ppm | 134 ppm |

**Patentansprüche**

1. Verfahren zur Herstellung von Polyesterolen verminderter Reaktivität durch Polykondensation von Dicarbonsäuren/ Dicarbonsäurederivaten und H-funktionellen Substanzen unter Verwendung von Zinnkatalysatoren, **dadurch gekennzeichnet, dass** die Polyesterole nach Beendigung der Veresterungsreaktion in Kontakt mit Sauerstoff gebracht werden.

2. Verfahren nach Anspruch 1, **dadurch gekennzeichnet, dass** der Sauerstoff der Luft verwendet wird.

3. Verfahren nach Anspruch 1 oder 2, **dadurch gekennzeichnet, dass** der Luftkontakt durch Einleiten trockener Pressluft erfolgt.

4. Verfahren nach Anspruch 1 oder 2, **dadurch gekennzeichnet, dass** der Luftkontakt durch Einleiten eines Magerluftgemisches erfolgt.

5. Verfahren nach einem der Ansprüche 1 bis 4, **dadurch gekennzeichnet, dass** Luft in den Polyesterreaktor nach Beendigung der Vakuumphase eingeleitet wird.

6. Verfahren nach einem der Ansprüche 1 bis 5, **dadurch gekennzeichnet, dass** Luft in den Lagertank des Polyesterols eingeleitet wird.

7. Verfahren nach einem der Ansprüche 1 bis 6, **dadurch gekennzeichnet, dass** Luft in die Tankfahrzeuge, die zum Transport der Polyesterole eingesetzt werden, eingeleitet wird.

8. Polyesterole, herstellbar nach einem der Ansprüche 1 bis 7.

9. Verwendung der Polyesterole gemäß Anspruch 8 für die Herstellung von Polyurethanen.

**Claims**

1. A process for the preparation of polyesterols of reduced reactivity by polycondensation of dicarboxylic acids/dicarboxylic acid derivatives and H-functional substances using tin catalysts, wherein the polyesterols are brought into contact with oxygen after the end of the esterification reaction.

2. The process according to claim 1, wherein atmospheric oxygen is used.

3. The process according to claim 1 or 2, wherein the contact with air is effected by passing in dry compressed air.

4. The process according to claim 1 or 2, wherein the contact with air is effected by passing in a lean air mixture.

5. The process according to any of claims 1 to 4, wherein air is passed into the polyester reactor after the end of the reduced-pressure phase.

6. The process according to any of claims 1 to 5, wherein air is passed into the polyesterol storage tank.

7. The process according to any of claims 1 to 6, wherein air is passed into the tanker vehicles which are used for transporting the polyesterols.

8. A polyesterol which can be prepared according to any of claims 1 to 7.

9. The use of a polyesterol according to claim 8 for the preparation of polyurethanes.

**Revendications**

1. Procédé pour la préparation de polyesterols de réactivité diminuée par polycondensation d'acides dicarboxyliques/dérivés d'acides dicarboxyliques et de substances à fonctionnalité H avec utilisation de catalyseurs d'étain, **caractérisé en ce que** les polyesterols sont mis en contact avec de l'oxygène après la fin de la réaction d'estérification.

2. Procédé selon la revendication 1, **caractérisé en ce qu'**on utilise l'oxygène de l'air.

3. Procédé selon la revendication 1 ou 2, **caractérisé en ce que** le contact avec l'air est réalisé en introduisant de l'air comprimé sec.

4. Procédé selon la revendication 1 ou 2, **caractérisé en ce que** le contact avec l'air est réalisé en introduisant un mélange d'air maigre.

5. Procédé selon l'une quelconque des revendications 1 à 4, **caractérisé en ce que** l'air est introduit dans le réacteur du polyester après la fin de la phase sous vide.

6. Procédé selon l'une quelconque des revendications 1 à 5, **caractérisé en ce que** l'air est introduit dans le réservoir du polyesterol.

7. Procédé selon l'une quelconque des revendications 1 à 6, **caractérisé en ce que** l'air est introduit dans les véhicules citernes qui sont utilisés pour le transport des polyesterols.

8. Polyesterols, pouvant être préparés selon l'une quelconque des revendications 1 à 7.

9. Utilisation de polyesterols selon la revendication 8 pour la préparation de polyuréthanes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2451727 A
- DD 148882
- DD 148460
- DD 126276

**In der Beschreibung aufgeführte Nicht-Patentliteratur**

- Polyurethane. Kunststoff-Handbuch. 1966, vol. VII
- KUNSTSTOFF-HANDBUCH. 1983
- KUNSTSTOFF-HANDBUCH. Carl Hanser Verlag, 1993
- **B. Fortunato ; A. Munari ; P. Manaresi ; P.Monari.** *Polymer,* vol. 35 (18), 4006